# EUROPÄISCHE PATENTSCHRIFT

(11) **EP 3 855 111 B1**
(45) Veröffentlichungstag und Bekanntmachung des Hinweises auf die Patenterteilung: **15.11.2023**
(21) Anmeldenummer: 20153592.9
(22) Anmeldetag: 24.01.2020
(51) Int. Cl.: G01B 11/24, G01B 11/26, G01B 9/02, G01B 9/02015

(54) **INTERFEROMETER ZUM ERZEUGEN EINES DIGITALEN INTERFEROGRAMMS ODER EINES DIGITALEN HOLOGRAMMS, MITTELS EINES UMLENKSPIEGELS**
INTERFEROMETER FOR DIGITAL INTERFEROMETRY OR DIGITAL HOLOGRAPHY, USING A DEFLECTING MIRROR
INTERFÉROMÈTRE POUR L'INTERFÉROMÉTRIE DIGITALE OU HOLOGRAPHIE DIGITALE, AVEC UN MIROIR DÉFLECTEUR

(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: SEYLER, Tobias, 79110 Freiburg (DE); BASLER, Carl, 79280 Au (DE); ANDERS, Joachim, 79111 Freiburg (DE); BERTZ, Alexander, 79110 Freiburg (DE)
(74) Vertreter: WSL Patentanwälte Partnerschaft mbB

(56) Entgegenhaltungen:
- WO-A1-2016/129283
- WO-A1-2019/012770
- DE-A1-102015 202 676
- KR-A- 20150 119 770
- US-A- 4 941 739
- US-A1- 2019 271 533

## Beschreibung

Die vorliegende Erfindung betrifft eine optische Messvorrichtung mit einem digitalen Bildsensor zum Erfassen von Bilddaten einer Szenerie, einem Umlenkspiegel mit einer elektromagnetische Strahlung spiegelnden Fläche, wobei der Umlenkspiegel derart eingerichtet und angeordnet ist, dass der Umlenkspiegel in einem Betrieb der Messvorrichtung elektromagnetische Strahlung von der Szenerie auf den Bildsensor leitet, und einer Steuer- und Auswerteeinrichtung, wobei die Steuer- und Auswerteeinrichtung derart mit dem Bildsensor verbunden ist, dass die Steuer- und Auswerteeinrichtung in dem Betrieb der Messvorrichtung die Bilddaten von dem Bildsensor erhält, wobei der Bildsensor derart eingerichtet ist, dass der Bildsensor mindestens in einer ersten Lage des Umlenkspiegels mindestens einen ersten Satz von Bilddaten der Szenerie erfasst, wobei auf der spiegelnden Fläche des Umlenkspiegels mindestens eine Referenzmarke vorgesehen ist, wobei die Steuer- und Auswerteeinrichtung derart eingerichtet ist, dass die Steuer- und Auswerteeinrichtung aus einem von dem Bildsensor in der ersten Lage des Umlenkspiegels erfassten Satz von Bilddaten entweder aus einer Winkelposition der Referenzmarke bezogen auf eine Achse oder aus einem Abstand der Referenzmarke von einem Bezugspunkt oder aus einer Neigung der Referenzmarke gegenüber einem Pfad der elektromagnetischen Strahlung einen ersten Wert für die erste Lage berechnet und diesen ersten Wert mit dem mindestens einen ersten Satz von Bilddaten verknüpft, und wobei das Interferometer einen Objektpfad und einen Referenzpfad aufweist, wobei der Umlenkspiegel in dem Objektpfad angeordnet ist und wobei der Bildsensor der Detektor des Interferometers ist.

Derartige optische Messvorrichtungen sind in vielfachen Ausgestaltungen aus dem Stand der Technik bekannt. Dabei dient der Umlenkspiegel dazu, die Beobachtungsrichtung der Messvorrichtung unabhängig von der Einbaulage des digitalen Bildsensors zu wählen und gegebenenfalls einzustellen.

Dabei ist es für viele Messanwendungen unabdingbar, die genaue Lage des Umlenkspiegels relativ zum Bildsensor während der Erfassung zu kennen, um absolute Fehler einer mit Hilfe der Messvorrichtung ausgewerteten Oberfläche der Szenerie zu reduzieren.

Dafür ist jedoch entweder eine mechanisch auch über längere Zeiträume stabile Montage des Umlenkspiegels relativ zu dem Bildsensor, d.h. eine Montage des Umlenkspiegels ohne Drift der Lage gegenüber dem Bildsensor, beispielsweise aufgrund thermischer Einflüsse, erforderlich oder eine Umlenkeinheit, welche es erlaubt, die Lage des Umlenkspiegels relativ zu dem Bildsensor zu verändern und gleichzeitig beispielsweise mit Encodern, zu erfassen.

Aus der KR 2015 0119770 A ist eine Vorrichtung zum Messen dreidimensionaler Koordinaten unter Verwendung einer Kamera, die in der Lage ist, das Hinzufügen künstlicher Beobachtungsinformationen zu minimieren, bekannt. Die Vorrichtung umfasst: einen Bilderfassungsteil zum Erfassen von Bildern von zu beobachtenden Objekten, die in einem Spiegel reflektiert werden; einen Bildanalyseteil zum Messen der Positionen von Beobachtungspunkten auf den Objektbildern durch Auffinden einer entsprechenden Beziehung zwischen den Beobachtungspunkten der Objektbilder; und einen Teil zur Wiederherstellung einer dreidimensionalen Form, um relative dreidimensionale Rauminformationen wiederherzustellen, die eine Korrelation sind, die zwischen den Bildkoordinaten der Beobachtungspunkte auf der Grundlage der Bildkoordinaten der Beobachtungspunkte eingestellt ist, die durch den Bildanalyseteil erfasst werden. Zusätzlich dazu umfasst die Vorrichtung: einen Abstandsmessteil zum Messen eines linearen Abstands zwischen zwei Beobachtungspunkten, eines linearen Abstands zwischen einem Beobachtungspunkt und einer Ebene des Spiegels, eines linearen Abstands zwischen einem Beobachtungspunkt und der Mitte der Kamera und ein Abstand zwischen einem Beobachtungspunkt und der im Spiegel reflektierten Kamera; und ein Dimensionskorrekturteil zum Wiederherstellen absoluter dreidimensionaler Koordinaten einschließlich Dimensionsinformationen durch Kombinieren der dreidimensionalen Rauminformationen, die durch das Wiederherstellungsteil für dreidimensionale Formen wiederhergestellt wurden, und der Entfernungsinformationen, die von dem Entfernungsmessteil empfangen werden.

Gemäß der WP 2019/012770 A1 wir eine Abbildungsvorrichtung bereitgestellt, die Folgendes umfasst: eine Sensoreinheit zum Einstrahlen von Licht auf ein Objekt und zum Erfassen von Licht, das von dem Objekt reflektiert wird, eine Entfernungsberechnungseinheit zum Berechnen der Entfernung zu dem Objekt auf der Grundlage von Erfassungsdaten von der Sensoreinheit, einen spiegelnden Reflektor, der auf der gegenüberliegenden Seite des Objekts von der Sensoreinheit angeordnet ist und eine Korrektureinheit zum Korrigieren von Fehlern, die in der berechneten Entfernung enthalten sind und die durch Interferenz zwischen Licht, das sich entlang eines ersten Weges von der Sensoreinheit zu dem Objekt bewegt hat, und Licht, das sich entlang eines zweiten Weges von der Sensoreinheit durch Reflexion an dem spiegelnden Reflektor zu dem Objekt bewegt hat, verursacht worden sind.

Aus der US 4,941,739 ist ein Spiegelabtastsystem bekannt, welches einen einzelnen Spiegel umfasst, der so montiert ist, dass er sich um eine erste Achse, die im Wesentlichen in der Ebene der spiegelnden Oberfläche liegt, und um eine zweite Achse dreht, die senkrecht zur ersten Achse verläuft und diese schneidet. Sowohl der Spiegel als auch die erste Achse drehen sich um die zweite Achse. Ein optisches System ist auf einen Teil der spiegelnden Oberfläche des Spiegels am oder in der Nähe des Schnittpunkts der beiden Achsen gerichtet und hat eine Brennachse, die im Wesentlichen mit der zweiten Achse ausgerichtet ist. Durch Ausrichten der reflektierenden Oberfläche in einer Richtung, um ein von einer Quelle ausgehendes und an einer ausgewählten Position auf einem Detektor, der Teil des optischen Systems ist, erfasstes Signal zu maximieren, und Messen der Winkelverschiebung des Spiegels um jede der ersten und zweiten Achsen bei so ausgerichteter reflektierender Oberfläche kann die Richtung einer erfassten Quelle bestimmt werden.

Die WO 2016/129283 A1 offenbart eine Abbildungsvorrichtung, die ein Abbildungselement, einen Spiegel, eine Linse und einen Spiegelkippantrieb umfasst. Das Abbildungselement bildet das von einem Objekt reflektierte Objektlicht ab. Der Spiegel reflektiert das Objektlicht und bewirkt, dass das Objektlicht auf das Abbildungselement fällt. Das Objektiv fokussiert das Objektlicht auf den Spiegel. Der Spiegelkippantrieb treibt den Spiegel an, um die optische Achse des Objektivs zu verändern. Die optische Achse des Objektivs stellt eine optische Achse dar, entlang der das vom Objektiv emittierte Objektlicht auf den Mittelpunkt des Abbildungselements fällt.

Aus der DE 10 2015 202 676 A1 ist ferner eine Messvorrichtung zur interferometrischen Bestimmung einer Abweichung einer tatsächlichen Form von einer Sollform einer optischen Oberfläche eines Testobjekts bekannt. Die Messvorrichtung umfasst ein optisches Element und einen Umlenkspiegel zum Erzeugen einer Messwelle mit einer an die Sollform der optischen Oberfläche angepassten Wellenfron. Weiterhin umfasst die Messvorrichtung ein Interferometer zur interferometrischen Vermessung der Messwelle nach Wechselwirkung mit der optischen Oberfläche des Testobjekts und eine Auswerteeinrichtung zur Bestimmung der tatsächlichen Form der optischen Oberfläche des Testobjekts aus dem Ergebnis der interferometrischen Vermessung. Ferner betrifft die Erfindung ein entsprechendes Verfahren zur interferometrischen Bestimmung einer Abweichung einer tatsächlichen Form von einer Sollform einer optischen Oberfläche eines Testobjekts.

Demgegenüber ist es Aufgabe der vorliegenden Erfindung, eine optische Messvorrichtung bereitzustellen, bei welcher die Lageerkennung für den Umlenkspiegel mit verringertem Aufwand verbunden ist.

Die zuvor genannte Aufgabe wird durch ein Interferometer zum Erzeugen eines digitalen Interferogramms oder eines digitalen Hologramms einer Oberfläche einer Szenerie gelöst, die aufweist einen digitalen Bildsensor zum Erfassen von Bilddaten einer Szenerie, einen Umlenkspiegel mit einer elektromagnetische Strahlung spiegelnden Fläche, wobei der Umlenkspiegel derart eingerichtet und angeordnet ist, dass der Umlenkspiegel in einem Betrieb des Interferometers elektromagnetische Strahlung von der Szenerie auf den Bildsensor leitet, und eine Steuer- und Auswerteeinrichtung, wobei die Steuer- und Auswerteeinrichtung derart mit dem Bildsensor verbunden ist, dass die Steuer- und Auswerteeinrichtung in dem Betrieb des Interferometers die Bilddaten von dem Bildsensor erhält, wobei der Bildsensor derart eingerichtet ist, dass der Bildsensor mindestens in einer ersten Lage des Umlenkspiegels mindestens einen ersten Satz von Bilddaten der Szenerie erfasst, wobei auf der spiegelnden Fläche des Umlenkspiegels mindestens eine Referenzmarke vorgesehen ist und wobei die Steuer- und Auswerteeinrichtung derart eingerichtet ist, dass die Steuer- und Auswerteeinrichtung aus einem von dem Bildsensor in der ersten Lage des Umlenkspiegels erfassten Satz von Bilddaten entweder aus einer Winkelposition der Referenzmarke bezogen auf eine Achse oder aus einem Abstand der Referenzmarke zu einem Bezugspunkt oder aus einer Neigung der Referenzmarke gegenüber einem Pfad der elektromagnetischen Strahlung einen ersten Wert für die Lage berechnet und diesen ersten Wert mit dem mindestens einen ersten Satz von Bilddaten verknüpft, wobei auf der spiegelnden Fläche des Umlenkspiegels mindestens eine Referenzmarke vorgesehen ist, wobei die Steuer- und Auswerteeinrichtung derart eingerichtet ist, dass die Steuer- und Auswerteeinrichtung aus einem von dem Bildsensor in der ersten Lage des Umlenkspiegels erfassten Satz von Bilddaten entweder aus einer Winkelposition der Referenzmarke bezogen auf eine Achse oder aus einem Abstand der Referenzmarke von einem Bezugspunkt oder aus einer Neigung der Referenzmarke gegenüber einem Pfad der elektromagnetischen Strahlung einen ersten Wert für die erste Lage berechnet und diesen ersten Wert mit dem mindestens einen ersten Satz von Bilddaten verknüpft, und wobei das Interferometer einen Objektpfad und einen Referenzpfad aufweist, wobei der Umlenkspiegel in dem Objektpfad angeordnet ist und wobei der Bildsensor der Detektor des Interferometers ist und wobei die Steuer- und Auswerteeinrichtung (10) derart eingerichtet ist, dass die Steuer- und Auswerteeinrichtung (10) in dem Betrieb des Interferometers (1) aus einem einzigen Satz von Bilddaten wahlweise eine scharfe Abbildung der Referenzmarke (11, 12) oder der Oberfläche (3) der Szenerie berechnet.

Die grundlegende Idee der vorliegenden Erfindung ist es, den Umlenkspiegel durch Anordnung einer Referenzmarke auf der spiegelnden Fläche selbst-referenzierend auszugestalten. Der digitale Bildsensor wird nicht nur zum Erfassen eines Satzes von Bilddaten der Szenerie verwendet, sondern auch zum Erfassen eines Satzes von Bilddaten der mit der Referenzmarke versehenen spiegelnden Fläche des Umlenkspiegels selbst.

Die erfindungsgemäße optische Messvorrichtung ermöglicht eine Selbstreferenzierung des Umlenkspiegels, d.h. eine Bestimmung der Lage des Umlenkspiegels ohne die Zuhilfenahme weiterer Messvorrichtungen, wie beispielsweise einem auf einem Glasmessstab beruhenden Encoder oder einem zusätzlichen Interferometer.

Unter der Lage (auch als räumliche Lage oder Pose bezeichnet) des Umlenkspiegels wird seine Position und Orientierung im Hinblick auf den Bildsensor verstanden.

In einer Ausführungsform der Erfindung ist die mindestens eine Referenzmarke derart ausgestaltet, dass die Referenzmarke die elektromagnetische Strahlung zumindest streut, absorbiert, filtert oder deren Phase verändert. Auf diese Weise ist die Referenzmarke von dem digitalen Bildsensor, insbesondere bei entsprechender Fokussierung des Bildsensors auf die spiegelnde Fläche des Umlenkspiegels mit der Referenzmarke erfassbar und auswertbar.

Die Auswertung des Satzes von Bilddaten der Referenzmarke hängt dabei insbesondere von der Art der optischen Messvorrichtung, aber auch von der Montierung des Umlenkspiegels ab.

Je nach Ausgestaltung der Messvorrichtung wird zur Bestimmung des ersten Werts für die erste Lage des Umlenkspiegels ein Abstand der Referenzmarke von einem Bezugspunkt oder eine Winkelposition der Referenzmarke bezogen auf eine Achse herangezogen. Für eine derartige Abstands- oder Winkelbestimmung genügt es in einer Ausführungsform, beispielsweise eine Kante der Referenzmarke zu identifizieren und deren Position im Hinblick auf einen Bezugspunkt zu bestimmen. Es versteht sich, dass eine derartige Auswertung der Referenzmarke mit den herkömmlichen zur Verfügung stehenden Verfahren und Algorithmen für die Auswertung elektronischer Bilddaten erfolgen kann.

In einer Ausführungsform wird unmittelbar die Neigung der Referenzmarke gegenüber einem Pfad der elektromagnetischen Strahlung erfasst und die Neigung als Grundlage für das Berechnen des ersten Werts für die erste Lage verwendet werden. Dies ist in einer Ausführungsform insbesondere dann möglich, wenn die optische Messvorrichtung eine interferometrische oder holographische Messvorrichtung ist.

Ausführungsformen der erfindungsgemäßen optischen Messvorrichtung kommen in verschiedenen Anwendungsszenarien zum Einsatz.

Änderungen der Lage des Umlenkspiegels gegenüber dem Bildsensor treten in einer Ausführungsform bei einer starren, dauerhaften mechanischen Verbindung zwischen dem digitalen Bildsensor und dem Umlenkspiegel auf, beispielsweise durch Erschütterung oder durch thermischen Einfluss. Um den damit verbundenen Fehler der Lage des Umlenkspiegels und damit bei der Erzeugung eines Gesamtbildes zu kompensieren, weist in einer solchen Ausführungsform die spiegelnde Fläche des Umlenkspiegels die erfindungsgemäße Referenzmarke auf.

In einer Ausführungsform der Erfindung ist der Umlenkspiegel in einer Montagehalterung angeordnet, wobei die Montagehalterung eine Verbindungseinrichtung aufweist, wobei die Verbindungseinrichtung lösbar mit einer zu der Verbindungeinrichtung komplementären Aufnahme verbunden ist, und wobei die Aufnahme bezogen auf den Bildsensor eine konstante Lage aufweist. Eine derartige Ausgestaltung ermöglicht es beispielsweise, den Umlenkspiegel an einer Werkzeugmaschine, einem Roboter oder einem Koordinatenmessgerät aufzunehmen, wenn er für eine Prüffunktion notwendig ist und den Umlenkspiegel wieder abzusetzen, wenn die Prüfaufgabe abgeschlossen ist. Zur Verbindung der Montagehalterung mit dem Umlenkspiegel mit dem Bildsensor dienen die komplementär zueinander ausgestaltete Verbindungseinrichtung auf der einen Seite und die Aufnahme auf der anderen Seite. Dabei ist die Aufnahme in konstanter Lage zu dem Bildsensor angeordnet, d.h. sie bewegt sich dauerhaft mit diesem mit.

Es versteht sich, dass trotz aller Präzision die Verbindung der Verbindungeinrichtung mit der Aufnahme immer nur eine limitierte Repositionierungsgenauigkeit aufweist. Um den verbleibenden Fehler bei der Repositionierung der Montagehalterung mit dem Umlenkspiegel gegenüber der Aufnahme mit dem Bildsensor zu kompensieren, weist in einer solchen Ausführungsform die spiegelnde Fläche des Umlenkspiegels die erfindungsgemäße Referenzmarke auf.

In einer Ausführungsform der Erfindung ist der Umlenkspiegel um mindestens eine Schwenkachse schwenkbar, sodass seine Lage bezogen auf den Bildsensor veränderbar und einstellbar ist.

Dabei erfolgt in einer Ausführungsform eine Lageänderung des Umlenkspiegels bezogen auf den Bildsensor durch Schwenken um die Achse manuell angetrieben oder von mindestens einem Motor angetrieben.

In einer Ausführungsform der Erfindung ist der Umlenkspiegel um eine Achse vollständig aus dem Strahlengang herausschwenkbar, sodass die Beobachtungsrichtung des Bildsensors nicht von dem Umlenkspiegel beeinflusst wird.

In einer Ausführungsform der Erfindung ist der digitale Bildsensor ein CCD- oder CMOS-Chip.

In einer Ausführungsform der Erfindung weist die optische Messvorrichtung eine abbildende Optik auf, die im Strahlengang zumindest zwischen dem digitalen Bildsensor und dem Umlenkspiegel oder zwischen dem Umlenkspiegel und der Szenerie angeordnet ist.

In einer Ausführungsform der Erfindung ist die Steuer- und Auswerteeinrichtung ein Rechner, insbesondere ein Rechner mit einem Prozessor.

In einer Ausführungsform der Erfindung ist die Steuer- und Auswerteeinrichtung derart mit dem mindestens einen Motor verbunden und derart eingerichtet, dass der Umlenkspiegel in dem Betrieb der Messvorrichtung von der Steuer- und Auswerteeinrichtung gesteuert mindestens aus der ersten Lage in eine zweite Lage verschwenkt wird, wobei die Steuer- und Auswerteeinrichtung aus einem von dem Bildsensor in der zweiten Lage des Umlenkspiegel erfassten mindestens einen Satz von Bilddaten entweder aus einer Winkelposition der Referenzmarke bezogen auf die Achse oder aus einem Abstand der Referenzmarke von einem Bezugspunkt oder aus einer Neigung der Referenzmarke gegenüber einem Pfad der elektromagnetischen Strahlung einen zweiten Wert für die zweite Lage berechnet und diesen zweiten Wert mit dem mindestens einen zweiten Satz von Bilddaten verknüpft.

Auf diese Weise werden den ersten und zweiten Sätzen von Bilddaten der Szenerie die Lagen des Umlenkspiegels bei der Erfassung der ersten und zweiten Sätze von Bilddaten zugeordnet. In einer Ausführungsform der Erfindung werden unter Berücksichtigung der Werte für die erste und die zweite Lage die ersten und zweiten Sätze von Bilddaten zu einem Gesamtbild zusammengesetzt. In einer Ausführungsform der Erfindung dient der erste Wert als Referenz für den zweiten Wert und damit die erste Lage als Referenz für die zweite Lage.

In einer Ausführungsform der Erfindung ist die Steuer- und Auswerteeinrichtung derart eingerichtet, dass die Steuer- und Auswerteeinrichtung in dem Betrieb der Messvorrichtung den mindestens einen ersten Bilddatensatz und den mindestens einen zweiten Bilddatensatz zu einem Gesamtbilddatensatz zusammenfügt, wobei der erste Wert für die erste Lage und der zweite Wert für die zweite Lage für eine Positionierung des mindestens einen ersten Bilddatensatzes und des mindestens einen zweiten Bilddatensatzes relativ zueinander in dem Gesamtbilddatensatz verwendet wird.

In einer Ausführungsform der Erfindung ist der von dem Bildsensor erfasste Satz von Bilddaten, aus welchem der Wert für die erste Lage des Umlenkspiegels berechnet wird, der erste Satz von Bilddaten der Szenerie. Gemäß der Erfindung wird der erste Satz von Bilddaten so ausgewertet, dass wahlweise entweder die Szenerie die relevante Bildinformation liefert oder die spiegelnde Oberfläche des Umlenkspiegels mit der Referenzmarke die relevante Bildinformation liefert. Eine derartige Wahl der abgebildeten Objektebene nach der Erfassung der Bilddaten wird in der digitalen Holografie auch als numerische Propagation bezeichnet.

In einer Ausführungsform der Erfindung gibt der Umlenkspiegel eine Beobachtungsrichtung des Bildsensors vor und der Umlenkspiegel ist um eine zu der Spiegelfläche parallele Achse schwenkbar, sodass ein Schwenken des Umlenkspiegels um die Achse eine Elevation der Beobachtungsrichtung einstellt. Soll beispielsweise mit Hilfe der optischen Messvorrichtung eine zylindrische Innenwandfläche erfasst werden, so ermöglicht es diese Anordnung der Achse, die axiale Position eines auf den Bildsensor abgebildeten Objektabschnitts einzustellen.

In einer Ausführungsform der Erfindung gibt der Umlenkspiegel eine Beobachtungsrichtung des Bildsensors vor, wobei der Umlenkspiegel um eine unter einem Winkel zur Spiegelfläche angeordnete Achse schwenkbar ist, sodass ein Schwenken des Umlenkspiegels um die Achse einen Azimut der Beobachtungsrichtung einstellt. Soll beispielsweise eine zylindrische Innenwandfläche als Szenerie erfasst werden, so lässt sich mit Hilfe dieser Anordnung der Achse insbesondere die Position des auf den Bildsensor abgebildeten Objektabschnitts in Umfangsrichtung einstellen.

Es versteht sich, dass in einer Ausführungsform der Umlenkspiegel um eine erste und eine zweite Achse schwenkbar angeordnet ist, wobei die erste und die zweite Achse einen Winkel einschlie-ßen. In einer Ausführungsform sind die erste Achse und die zweite Achse zueinander senkrecht. Auf diese Weise lässt sich ein System bauen, mit welchem sich die Szenerie vollständig abtasten lässt.

Die erfindungsgemäße Messvorrichtung ist ein Interferometer zur interferometrischen Vermessung einer Form einer Oberfläche der Szenerie, wobei das Interferometer einen Objektpfad und einen Referenzpfad aufweist, wobei der Umlenkspiegel in dem Objektpfad angeordnet ist und wobei der Bildsensor der Detektor des Interferometers ist. In einer solchen Ausführungsform der optischen Messvorrichtung wird die Lage der Referenzmarke mit einer interferometrischen Abbildung bestimmt.

Erfindungsgemäß ist die Steuer- und Auswerteeinrichtung derart eingerichtet, dass die Steuer- und Auswerteeinrichtung in dem Betrieb des Interferometers aus einem einzigen Satz von Bilddaten wahlweise eine scharfe Abbildung der Referenzmarke oder der Oberfläche der Szenerie berechnet. Erfindungsgemäß ist die Messvorrichtung eine Vorrichtung zum Erzeugen eines digitalen Interferogramms oder eines digitalen Hologramms. Es ist ein entscheidender Vorteil, dass es die digitale Interferometrie oder Holographie ermöglicht, nachträglich, und zwar rein numerisch, aus einem einzigen Satz von Bilddaten wahlweise eine scharfe Abbildung der spiegelnden Oberfläche des Umlenkspiegels mit der Referenzmarke oder eine scharfe Abbildung der der Szenerie bzw. der Oberfläche der Szenerie zu berechnen. Mit anderen Worten ausgedrückt wird aus dem gleichen Satz von Bilddaten einmal die Information für die Berechnung des Werts der Lage des Umlenkspiegels und einmal die Information für die Berechnung einer Höhenkarte der Oberfläche der Szenerie verwendet.

Dabei ist in einer Ausführungsform die Steuer- und Auswerteeinrichtung derart eingerichtet, dass für mindestens drei voneinander verschiedene diskrete Phasendifferenzen zwischen der elektromagnetischen Strahlung in dem Objektpfad und der elektromagnetischen Strahlung in dem Referenzpfad jeweils eine Intensität an einem Ort des Interferenzmusters erfasst wird und aus diesen mindestens drei Erfassungen zumindest eine Höhe der Oberfläche der Szenerie oder eine Neigung der Referenzmarke bestimmt wird.

In einer dazu alternativen Ausführungsform ist die Steuer- und Auswerteeinrichtung derart eingerichtet, dass bei einer Anordnung, bei welcher der Objektpfad und der Referenzpfad auf dem Bildsensor einen von Null verschiedenen Winkel einschließen, die Intensität eines Interferenzmusters an drei nebeneinanderliegenden Anordnungen des Interferenzmusters erfasst wird und aus diesen mindestens drei Erfassungen zumindest eine Höhe der Oberfläche oder die Neigung der Referenzmarke bestimmt wird.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine schematische Seitenansicht einer Ausführungsform der erfindungsgemäßen optischen Messvorrichtung mit einem Umlenkspiegel in einer ersten Lage.
- Figur 2: ist eine schematische Seitenansicht der optischen Messvorrichtung aus Figur 1 mit dem Umlenkspiegel in einer zweiten Lage.
- Figur 3: ist eine schematische Seitenansicht der optischen Messvorrichtung aus den Figuren 1 und 2 mit dem aus dem Strahlengang heraus verschwenkten Umlenkspiegel.
- Figur 4: ist eine schematische Darstellung eines Interferometers als Teil einer erfindungsgemäßen optischen Messvorrichtung aus den Figuren 1 bis 3.

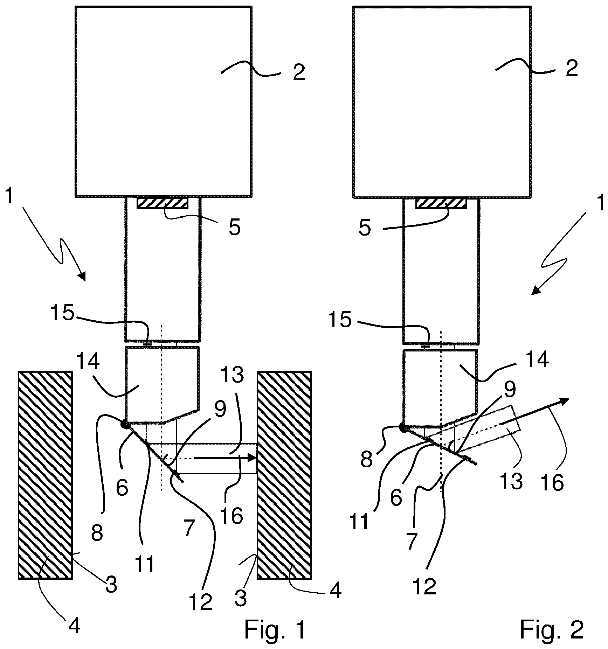

In den Figuren 1 bis 3 ist schematisch eine optische Messvorrichtung 1 dargestellt, welche an einem Maschinenkopf 2 einer mehrachsigen Werkzeugmaschine bewegbar aufgenommen ist, um eine komplexe Szenerie umfassend zu erfassen.

Die optische Messvorrichtung 1 übernimmt die Aufgabe, die von der mehrachsigen Werkzeugmaschine, deren Maschinenkopf 2 in den Figuren gezeigt ist, bearbeitete Oberfläche 3 eines Werkstücks 4 (nur in Figur 1 gezeigt) zu prüfen. Dabei ist die Oberfläche 3 in dem gezeigten Beispiel eine zylindrische Innenwandfläche. Das Werkstück 4 mit seiner Oberfläche 3 bildet einen Teil der Szenerie im Sinne der vorliegenden Anmeldung.

Die optische Messvorrichtung 1 umfasst einen digitalen Bildsensor 5 sowie einen Umlenkspiegel 6. Bei dem Bildsensor 5 handelt es sich um eine Digitalkamera mit einer flächigen, pixelartigen Anordnung von einzelnen Strahlungsdetektoren.

Um mit Hilfe der Messvorrichtung 1 die Oberfläche 3 des Werkstücks 4 möglichst vollständig erfassen zu können ist der Umlenkspiegel 6 um zwei zueinander senkrechte Achsen 7, 8 verschwenkbar. Die erste Achse 7 steht im Wesentlichen senkrecht auf der Oberfläche des Bildsensors 5 und der Spiegel ist um diese Achse 7 um 360° drehbar. Auf diese Weise ist die Oberfläche 3 des Werkstücks 4 in Umfangsrichtung vollständig mit dem Strahlengang der elektromagnetischen Strahlung 13 bzw. mit der von dem Umlenkspiegel 6 definierten Beobachtungsrichtung abtastbar.

Die zur Achse 7 senkrechte Achse 8 ist eine zu der spiegelnden Fläche 9 des Umlenkspiegels 6 parallele Schwenkachse. Ein Schwenken des Spiegels 6 um die Achse 8 führt zu einer Änderung der axialen Beobachtungsrichtung der Messvorrichtung 1. Mit anderen Worten ausgedrückt ermöglichen es die beiden Achsen 7 und 8, um welche der Umlenkspiegel 6 verschwenkbar ist, den Azimut sowie die Elevation der Beobachtungsrichtung 16 der Messvorrichtung 1 einzustellen.

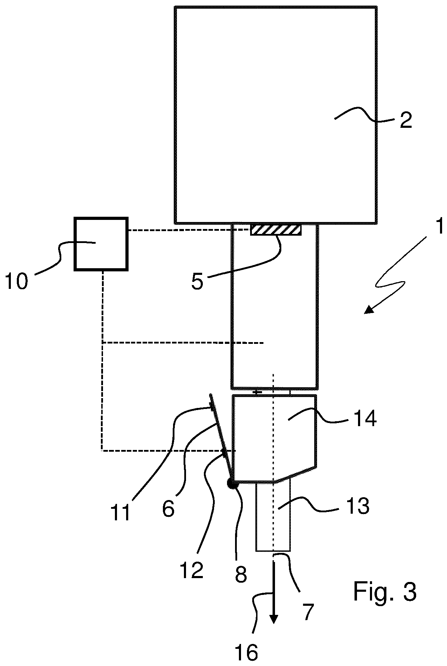

Um diese Einstellbarkeit zu ermöglichen sind die Motoren, welche die Schwenkbewegungen um die Achsen 7 und 8 antreiben, mit einer Steuer- und Auswerteeinrichtung 10 (in Figur 3 gezeigt) verbunden. Diese Steuer- und Auswerteeinrichtung regelt mit Hilfe der im Betrieb der Messvorrichtung 1 erhaltenen und ausgewerteten Sätze von Bilddaten von dem digitalen Bildsensor 5 die Motoren.

Soll nun ein vollständiges Bild der Oberfläche 3 des Werkstücks 4 aufgenommen werden, so müssen eine Reihe von Sätzen von mit dem Bildsensor 5 erzeugten Bilddaten zu einem Gesamtbild zusammengefügt werden. Zwischen der Erfassung der einzelnen Sätze von Bilddaten erfolgt eine Schwenkbewegung des Umlenkspiegels 6 um seine Achsen 7, 8. Beispielsweise werden zunächst mit einer Lage des Umlenkspiegels 6 bezogen auf die Achse 8 wie in Figur 1 gezeigt sämtliche Umfangspositionen des zylindrischen Werkstücks 4 abgetastet. Dann erfolgt ein Schwenken um die Achse 8 und ein erneutes optisches Abtasten über den gesamten Umfang. Für das Zusammenfügen der einzelnen Sätze von Bilddaten zu einem Gesamtbild ist es erforderlich, die Lage des Umlenkspiegels 6 und damit die Beobachtungsrichtung 16 der Messvorrichtung 1 für jeden Satz von Bilddaten der Oberfläche 3 des Werkstücks 4 zu kennen.

Auf der spiegelnden Fläche 9 des Umlenkspiegels 6 sind zwei Referenzmarken 11, 12 angeordnet. Diese Referenzmarken 11, 12 sind in der dargestellten Ausführungsform Oberflächenabschnitte auf der Spiegelfläche 9, welche aufgeraut sind und daher die elektromagnetische Strahlung 13 nicht nach dem Reflexionsgesetz reflektieren, sondern streuen. Die Lage der Referenzmarken 11, 12 ändert sich in Abhängigkeit von der Schwenkung des Umlenkspiegels 6 um die Achsen 7, 8.

Ändert sich die Lage durch Schwenken um die Achse 8, so ändert sich der Abstand der Referenzmarken 11, 12 von der Achse 7. Wird der Umlenkspiegel 6 hingegen um die Achse 7 geschwenkt, so verändern sich die Winkelpositionen der Referenzmarken 11, 12 bezogen auf die Achse 7. Auf diese Weise lässt sich anhand des Abstandes der Referenzmarken 11, 12 von der Achse 7 einerseits und anhand der Winkelposition der Referenzmarken 11, 12 bezogen auf die Achse 7 die exakte Lage des Umlenkspiegels 6 bei der Erfassung jedes Satzes von Bilddaten der Oberfläche 3 des Werkstücks 4 bestimmen.

Hierzu ist außer dem digitalen Bildsensor 5, welcher auch zur Erfassung der Sätze von Bilddaten der Oberfläche 3 des Werkstücks 4 dient, keine weitere Messvorrichtung erforderlich. Der Aufwand gegenüber Vorrichtungen mit einer gesonderten Referenzierung eines Umlenkspiegels, wie beispielsweise Encodern auf den Drehachsen 7, 8, ist erheblich reduziert.

Zu jedem Satz von Bilddaten, welcher mit Hilfe des Bildsensors 5 aufgenommen wird, wird auf Basis der Referenzmarken 11, 12 auch ein Wert für die Lage des Umlenkspiegels 6 während der Erfassung des Satzes von Bilddaten und damit ein Wert für die Beobachtungsrichtung 16 der elektromagnetischen Strahlung 13 ermittelt.

Figur 2 zeigt beispielhaft den Umlenkspiegel 6 in einer gegenüber Figur 1 um die Achse 8 verschwenkten Lage. Deutlich ist erkennbar, dass sich der Abstand der Referenzmarken 11, 12 von der Achse 7 verändert hat und wie das Schwenken des Spiegels 6 die Beobachtungsrichtung 16 der Messvorrichtung 1 beeinflusst.

In Figur 3 ist der Umlenkspiegel 6 vollständig aus dem Strahlengang der elektromagnetischen Strahlung 13 herausgeschwenkt, sodass die Beobachtungsrichtung 16 der Messvorrichtung 1 parallel zur Achse 7 ist.

In der dargestellten Ausführungsform ist der Umlenkspiegel 6 mit einem Halter 14 um die Achse 7 verschwenkbar. Der Halter 14 ist aus einem für die elektromagnetische Strahlung 13 transparenten Material gefertigt. Zusätzlich zu den Referenzmarken 11, 12 ist eine weitere Referenzmarke 15 auf dem transparenten Körper des Halters 14 vorgesehen. Diese Referenzmarke dient zusätzlich zu den Referenzmarken 11, 12 zur Bestimmung der Lage des Umlenkspiegels 6 bezüglich einer Schwenkbewegung um die Achse 7.

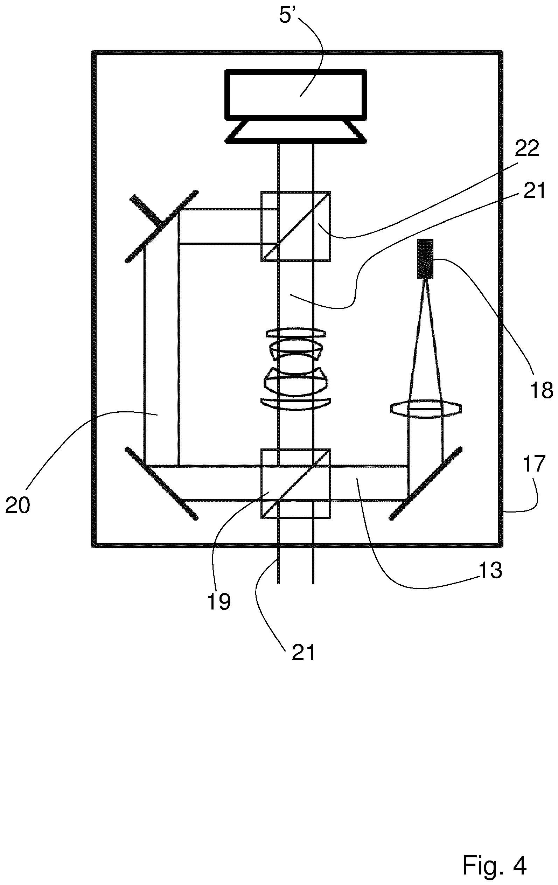

Figur 4 ist eine schematische Darstellung eines Interferometers 17 zur Erfassung von digitalen Hologrammen um beispielsweise eine Höhenkarte der Oberfläche 3 des Werkstücks 4 zu generieren. Dabei tritt das gesamte Interferometer 17 in der Ausführungsform der Messvorrichtung 1 aus den Figuren 1 bis 3 an die Stelle des Bildsensors 5, wobei das Interferometer 17 eine Kamera 5' als Bildsensor umfasst.

Die erforderliche elektromagnetische Strahlung 13 wird mit Hilfe mindestens eines Lasers erzeugt. Die Einkopplung der Strahlung 13 in das Interferometer 17 erfolgt über einen Lasereingang 18.

Die elektromagnetische Strahlung 13 von dem Lasereingang 18 wird mittels eines Strahlteilerwürfels 19 auf einen Referenzpfad 20 und einen Objektpfad 21 aufgeteilt. Die Strahlung 13 des Objektpfads wird von dem Strahlteilerwürfel 19 auf die Oberfläche 3 des Werkstücks 4 geleitet. Die von der Oberfläche 3 des Werkstücks 4 zurück reflektierte oder gestreute Strahlung 13 wird durch den Strahlteilerwürfel 19 transmittiert und mit Hilfe eines weiteren Strahlteilerwürfels 22 räumlich mit der Strahlung 13 aus dem Referenzpfad 20 überlagert. Die räumlich überlagerte Strahlung aus dem Objektpfad 21 und dem Referenzpfad 20 wird auf die Kamera 5' gegeben.

Das so erfasste Interferenzmuster kann nun ausgewertet und beispielsweise mit zuvor ausgewerteten Interferenzmustern verglichen werden, um eine Verformungsmessung durchzuführen. Unter der Nutzung mindestens zweier Laser ermöglicht das Interferometer in der Ausführungsform aus Figur 4, eine Höhenmessung auch an einer optisch rauen Oberfläche durchzuführen, welche Specklemuster erzeugt, die wiederum zufällige Phasenwerte generieren. Dabei wird die Differenzphase bei den zwei leicht unterschiedlichen Wellenlängen der in den Lasereingang 18 eingekoppelten Laser bestimmt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch im beliebigen Zusammenstellung mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung dagegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Merkmale oder Schritte aus und der unbestimmte Artikel "einer" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Messvorrichtung
- 2: Maschinenkopf
- 3: Oberfläche
- 4: Werkstück
- 5, 5`: Bildsensor
- 6: Umlenkspiegel
- 7: Achse
- 8: Achse
- 9: spiegelnde Fläche des Umlenkspiegels
- 10: Steuer- und Auswerteeinrichtung
- 11, 12, 15: Referenzmarke
- 13: elektromagnetische Strahlung
- 14: Halter
- 16: Beobachtungsrichtung
- 17: Interferometer
- 18: Lasereingang
- 19, 22: Strahlteilerwürfel
- 20: Referenzpfad
- 21: Objektpfad

## Patentansprüche

1. Interferometer (1) zum Erzeugen eines digitalen Interferogramms oder eines digitalen Hologramms einer Oberfläche einer Szenerie (3, 4) mit
einem digitalen Bildsensor (5) zum Erfassen von Bilddaten der Szenerie (3, 4), einem Umlenkspiegel (6) mit einer elektromagnetische Strahlung spiegelnden Fläche (9),
wobei der Umlenkspiegel (6) derart eingerichtet und angeordnet ist, dass der Umlenkspiegel (6) in einem Betrieb des Interferometers (1) elektromagnetische Strahlung von der Szenerie (3, 4) auf den Bildsensor (5) leitet, und
einer Steuer- und Auswerteeinrichtung (10),
wobei die Steuer- und Auswerteeinrichtung (10) derart mit dem Bildsensor (5) verbunden ist, dass die Steuer- und Auswerteeinrichtung (10) in dem Betrieb des Interferometers (1) die Bilddaten von dem Bildsensor erhält, wobei der Bildsensor (5) derart eingerichtet ist, dass der Bildsensor (5) mindestens in einer ersten Lage des Umlenkspiegels (6) mindestens einen ersten Satz von Bilddaten der Szenerie (3, 4) erfasst,
wobei auf der spiegelnden Fläche (9) des Umlenkspiegels (6) mindestens eine Referenzmarke (11, 12) vorgesehen ist,
wobei die Steuer- und Auswerteeinrichtung (10) derart eingerichtet ist, dass die Steuer- und Auswerteeinrichtung (10) aus einem von dem Bildsensor (5) in der ersten Lage des Umlenkspiegels (6) erfassten Satz von Bilddaten entweder aus einer Winkelposition der Referenzmarke (11, 12) bezogen auf eine Achse oder aus einem Abstand der Referenzmarke von einem Bezugspunkt oder aus einer Neigung der Referenzmarke gegenüber einem Pfad der elektromagnetischen Strahlung einen ersten Wert für die erste Lage berechnet und diesen ersten Wert mit dem mindestens einen ersten Satz von Bilddaten verknüpft, und
wobei das Interferometer einen Objektpfad und einen Referenzpfad aufweist, wobei der Umlenkspiegel (6) in dem Objektpfad angeordnet ist und wobei der Bildsensor (5) der Detektor des Interferometers ist,
**dadurch gekennzeichnet, dass**
die Steuer- und Auswerteeinrichtung (10) derart eingerichtet ist, dass die Steuer- und Auswerteeinrichtung (10) in dem Betrieb des Interferometers (1) aus einem einzigen Satz von Bilddaten wahlweise eine scharfe Abbildung der Referenzmarke (11, 12) oder der Oberfläche (3) der Szenerie berechnet.

2. Interferometer (1) nach dem vorhergehenden Anspruch, wobei
der Umlenkspiegel (6) in einer Montagehalterung angeordnet ist,
wobei die Montagehalterung eine Verbindungseinrichtung aufweist,
wobei die Verbindungseinrichtung lösbar mit einer zu der Verbindungseinrichtung komplementären Aufnahme verbunden ist, und
wobei die Aufnahme bezogen auf den Bildsensor (5) eine konstante Lage aufweist.

3. Interferometer (1) nach einem der vorhergehenden Ansprüche, wobei der Umlenkspiegel (6) um mindestens eine Achse (7, 8) schwenkbar ist, so dass seine Lage bezogen auf den Bildsensor (5) veränderbar ist.

4. Interferometer (1) nach dem vorhergehenden Anspruch, wobei der Umlenkspiegel (6) von mindestens einem Motor angetrieben um die mindestens eine Achse (7, 8) schwenkbar ist.

5. Interferometer (1) nach dem vorhergehenden Anspruch, wobei die Steuer- und Auswerteeinrichtung (10) derart mit dem mindestens einen Motor verbunden ist und derart eingerichtet ist, dass der Umlenkspiegel (6) in dem Betrieb des Interferometers (1) von der Steuer- und Auswerteeinrichtung (10) gesteuert mindestens aus der ersten Lage in eine zweite Lage verschwenkt wird, und dass die Steuer- und Auswerteeinrichtung (10) aus einem von dem Bildsensor (5) in der zweiten Lage des Umlenkspiegels (6) erfassten mindestens einen Satz von Bilddaten entweder aus einer Winkelposition der Referenzmarke bezogen auf die Achse oder aus einem Abstand der Referenzmarke von einem Bezugspunkt oder aus einer Neigung der Referenzmarke gegenüber einem Pfad der elektromagnetischen Strahlung einen zweiten Wert für die zweite Lage berechnet und diesen zweiten Wert mit dem mindestens einen zweiten Satz von Bilddaten verknüpft.

6. Interferometer (1) nach einem der Ansprüche 3 bis 5, wobei der Umlenkspiegel eine Beobachtungsrichtung des Bildsensors (5) vorgibt und wobei der Umlenkspiegel (6) um eine zu der Spiegelfläche parallele Achse schwenkbar ist, so dass ein Schwenken des Umlenkspiegels (6) um die Achse (7, 8) eine Elevation der Beobachtungsrichtung einstellt.

7. Interferometer (1) nach einem der Ansprüche 3 bis 5, wobei der Umlenkspiegel eine Beobachtungsrichtung des Bildsensors vorgibt und wobei der Umlenkspiegel um eine unter einem Winkel zu der Spiegelfläche angeordnete Achse schwenkbar ist, so dass ein Schwenken des Umlenkspiegels (6) um die Achse (7, 8) einen Azimut der Beobachtungsrichtung einstellt.

8. Interferometer (1) nach einem der Ansprüche 3 bis 7, wobei der Umlenkspiegel (6) um eine erste Achse (7, 8) und um eine zweite Achse (7, 8) schwenkbar abgeordnet ist, wobei die erste Achse (7, 8) und die zweite Achse (7, 8) einen Winkel einschließen.

9. Interferometer (1) nach dem vorhergehenden Anspruch, **dadurch gekennzeichnet, dass** die erste Achse (7, 8) und die zweite Achse (7, 8) senkrecht zueinander sind.

10. Interferometer (1) nach einem der vorhergehenden Ansprüche, wobei die mindestens eine Referenzmarke (11, 12) derart ausgestaltet ist, dass die Referenzmarke (11, 12) die elektromagnetische Strahlung zumindest streut, absorbiert, filtert oder deren Phase verändert.

11. Interferometer (1) nach einem der vorhergehenden Ansprüche, **dadurch gekennzeichnet, dass** die Steuer- und Auswerteeinrichtung (10) derart eingerichtet ist, dass die Steuer- und Auswerteeinrichtung (10) in dem Betrieb des Interferometers den mindestens einen ersten Bilddatensatz und den mindestens einen zweiten Bilddatensatz zu einem Gesamtbilddatensatz zusammenfügt, wobei der erste Wert für die erste Lage und der zweite Wert für die zweite Lage für eine Positionierung des mindestens einen ersten Bilddatensatzes und des mindestens einen zweiten Bilddatensatzes relativ zueinander in dem Gesamtbilddatensatz verwendet wird.

12. Interferometer (1) nach einem der vorhergehenden Ansprüche, wobei die Steuer- und Auswerteeinrichtung (10) derart eingerichtet ist, dass für mindestens drei voneinander verschiedene diskrete Phasendifferenzen zwischen der elektromagnetischen Strahlung in dem Objektpfad und der elektromagnetischen Strahlung in dem Referenzpfad jeweils eine Intensität an einem Ort eines Interferenzmusters erfasst wird und aus diesen mindestens drei Erfassungen zumindest eine Höhe der Oberfläche der Szenerie oder eine Neigung der Referenzmarke (11, 12) bestimmt wird.

13. Interferometer (1) nach einem der Ansprüche 1 bis 11, wobei die Steuer- und Auswerteeinrichtung (10) derart eingerichtet ist, dass bei einer Anordnung, bei welcher der Objektpfad und der Referenzpfad auf dem Bildsensor (5) einen von Null verschiedenen Winkel einschließen, die Intensität eines Interferenzmusters an drei nebeneinander liegende Orten des Interferenzmusters erfasst wird und aus diesen mindestens drei Erfassungen zumindest eine Höhe der Oberfläche (3) oder die Neigung der Referenzmarke (11, 12) bestimmt wird.

## Claims

1. An interferometer (1) for generating a digital interferogram or a digital hologram of a surface of a scenery (3, 4) with
a digital image sensor (5) for capturing image data of the scenery (3, 4),
a deflection mirror (6) with a surface (9) reflecting electromagnetic radiation,
the deflecting mirror (6) being set up and arranged in such a way that, during operation of the interferometer (1), the deflecting mirror (6) guides electromagnetic radiation from the scenery (3, 4) onto the image sensor (5), and
a control and evaluation means (10),
wherein the control and evaluation means (10) is connected to the image sensor (5) in such a way that the control and evaluation means (10) receives the image data from the image sensor during operation of the interferometer (1),
wherein the image sensor (5) is arranged in such a way that the image sensor (5) detects at least a first set of image data of the scenery (3, 4) at least in a first position of the deflection mirror (6),
wherein at least one reference mark (11, 12) is provided on the reflecting surface (9) of the deflecting mirror (6),
wherein the control and evaluation means (10) is set up in such a way that the control and evaluation means (10) calculates a first value for the first position either from an angular position of the reference mark (11, 12) relative to an axis or from a distance of the reference mark from a reference point or from an inclination of the reference mark relative to a path of the electromagnetic radiation from a set of image data detected by the image sensor (5) in the first position of the deflecting mirror (6) and links this first value to the at least one first set of image data, and
wherein the interferometer comprises an object path and a reference path, wherein the deflection mirror (6) is arranged in the object path and wherein the image sensor (5) is the detector of the interferometer,
**characterised in that**
the control and evaluation means (10) is set up in such a way that, during the operation of the interferometer (1), the control and evaluation means (10) selectively calculates a sharp image of the reference mark (11, 12) or of the surface (3) of the scenery from a single set of image data.

2. The interferometer (1) according to the preceding claim, wherein
the deflecting mirror (6) is arranged in a mounting bracket,
wherein the mounting bracket comprises a connecting means,
wherein the connecting means is detachably connected to a receptacle complementary to the connecting means, and
wherein the receptacle has a constant position relative to the image sensor (5).

3. The interferometer (1) according to any one of the preceding claims, wherein the deflection mirror (6) is pivotable about at least one axis (7, 8) so that its position relative to the image sensor (5) is variable.

4. The interferometer (1) according to the preceding claim, wherein the deflecting mirror (6) is pivotable about the at least one axis (7, 8) driven by at least one motor.

5. The interferometer (1) according to the preceding claim, wherein the control and evaluation means (10) is connected to the at least one motor and is set up in such a way that the deflection mirror (6) is pivoted at least from the first position into a second position under the control of the control and evaluation means (10) during operation of the interferometer (1), and in that the control and evaluation means (10) calculates a second value for the second position from at least one set of image data detected by the image sensor (5) in the second position of the deflecting mirror (6), either from an angular position of the reference mark with respect to the axis or from a distance of the reference mark from a reference point or from an inclination of the reference mark with respect to a path of the electromagnetic radiation, and links this second value to the at least one second set of image data.

6. The interferometer (1) according to any one of claims 3 to 5, wherein the deflection mirror defines an observation direction of the image sensor (5) and wherein the deflection mirror (6) is pivotable about an axis parallel to the mirror surface, so that pivoting of the deflection mirror (6) about the axis (7, 8) sets an elevation of the observation direction.

7. The interferometer (1) according to any one of claims 3 to 5, wherein the deflection mirror defines an observation direction of the image sensor and wherein the deflection mirror is pivotable about an axis arranged at an angle to the mirror surface so that pivoting the deflection mirror (6) about the axis (7, 8) sets an azimuth of the observation direction.

8. The interferometer (1) of any one of claims 3 to 7, wherein the deflection mirror (6) is pivotable about a first axis (7, 8) and a second axis (7, 8), the first axis (7, 8) and the second axis (7, 8) forming an angle.

9. The interferometer (1) according to the preceding claim, **characterised in that** the first axis (7, 8) and the second axis (7, 8) are perpendicular to each other.

10. The interferometer (1) according to any one of the preceding claims, wherein the at least one reference mark (11, 12) is arranged in such a way that the reference mark (11, 12) at least scatters, absorbs or filters the electromagnetic radiation or changes the phase of the electromagnetic radiation.

11. The interferometer (1) according to any one of the preceding claims, **characterized in that** the control and evaluation means (10) is set up in such a way that, during the operation of the interferometer, the control and evaluation means (10) combines the at least one first image data set and the at least one second image data set to form a total image data set, wherein the first value for the first position and the second value for the second position are used for a positioning of the at least one first image data set and the at least one second image data set relative to each other in the overall image data set.

12. The interferometer (1) according to any one of the preceding claims, wherein the control and evaluation means (10) is set up in such a way that for each of at least three discrete phase differences between the electromagnetic radiation in the object path and the electromagnetic radiation in the reference path, which three discrete phase differences differ from one another, an intensity is detected at a location of an interference pattern, and at least one height of the surface of the scenery or an inclination of the reference mark (11, 12) is determined from these at least three detections.

13. The interferometer (1) according to any one of claims 1 to 11, wherein the control and evaluation means (10) is set up in such a way that, in an implementation in which the object path and the reference path on the image sensor (5) enclose a non-zero angle, the intensity of an interference pattern is detected at three adjacent locations of the interference pattern and at least one height of the surface (3) or the inclination of the reference mark (11, 12) is determined from these at least three detections.

## Revendications

1. Interféromètre (1) permettant de générer un interférogramme numérique ou un hologramme numérique de la surface d'une scène (3, 4), comprenant
un capteur d'image numérique (5) permettant de capturer des données d'image de la scène (3, 4),
un miroir de renvoi (6) muni d'une surface réfléchissant le rayonnement électromagnétique (9),
le miroir de renvoi (6) étant conçu et disposé de telle manière que le miroir de renvoi (6) dirige le rayonnement électromagnétique de la scène (3, 4) vers le capteur d'image (5) lorsque l'interféromètre (1) est en fonctionnement, et
un dispositif de commande et d'évaluation (10),
le dispositif de commande et d'évaluation (10) étant relié au capteur d'image (5) de telle manière que le dispositif de commande et d'évaluation (10) reçoive les données d'image du capteur d'image lorsque l'interféromètre (1) est en fonctionnement,
le capteur d'image (5) étant conçu de telle manière que le capteur d'image (5) enregistre au moins un premier ensemble de données d'image de la scène (3, 4) au moins dans une première position du miroir de renvoi (6),
au moins une marque de référence (11, 12) étant fournie sur la surface réfléchissante (9) du miroir de renvoi (6),
le dispositif de commande et d'évaluation (10) étant conçu de telle manière que le dispositif de commande et d'évaluation (10) calcule une première valeur pour la première position, à l'aide d'un ensemble de données d'image enregistré par le capteur d'image (5) dans la première position du miroir de renvoi (6), soit à partir d'une position angulaire de la marque de référence (11, 12) par rapport à un axe, soit à partir d'une distance entre la marque de référence et un point de repère, soit à partir d'une inclinaison de la marque de référence par rapport à un trajet du rayonnement électromagnétique, et associe ladite première valeur audit au moins un premier ensemble de données d'image, et
l'interféromètre ayant un trajet objet et un trajet de référence, le miroir de renvoi (6) étant agencé sur le trajet objet et le capteur d'image (5) étant le détecteur de l'interféromètre,
**caractérisé en ce que**
le dispositif de commande et d'évaluation (10) est conçu de telle manière que le dispositif de commande et d'évaluation (10) calcule de manière sélective une image nette de la marque de référence (11, 12) ou de la surface (3) de la scène à partir d'un seul ensemble de données d'image lorsque l'interféromètre (1) est en fonctionnement.

2. Interféromètre (1) selon la revendication précédente,
le miroir de renvoi (6) étant agencé dans un support de montage,
le support de montage comprenant un dispositif de connexion,
le dispositif de connexion étant relié de manière amovible à un logement complémentaire au dispositif de connexion, et
le logement ayant une position constante par rapport au capteur d'image (5).

3. Interféromètre (1) selon l'une quelconque des revendications précédentes, le miroir de renvoi (6) pouvant pivoter autour d'au moins un axe (7, 8) de sorte que sa position puisse être modifiée par rapport au capteur d'image (5).

4. Interféromètre (1) selon la revendication précédente, le miroir de renvoi (6) pouvant pivoter autour dudit au moins un axe (7, 8) en étant entraîné par au moins un moteur.

5. Interféromètre (1) selon la revendication précédente, le dispositif de commande et d'évaluation (10) étant relié audit au moins un moteur et étant conçu de telle manière que le miroir de renvoi (6) soit pivoté au moins de la première position vers une seconde position de manière commandée par le dispositif de commande et d'évaluation (10) lorsque l'interféromètre (1) est en fonctionnement, et de telle manière que le dispositif de commande et d'évaluation (10) calcule une seconde valeur pour la seconde position à l'aide d'au moins un ensemble de données d'image enregistré par le capteur d'image (5) dans la seconde position du miroir de renvoi (6), soit à partir d'une position angulaire de la marque de référence par rapport à l'axe, soit à partir d'une distance entre la marque de référence et un point de repère, soit à partir d'une inclinaison de la marque de référence par rapport à un trajet du rayonnement électromagnétique, et associe ladite seconde valeur audit au moins un second ensemble de données d'image.

6. Interféromètre (1) selon l'une quelconque des revendications 3 à 5, le miroir de renvoi définissant une direction d'observation du capteur d'image (5) et le miroir de renvoi (6) pouvant être pivoté autour d'un axe parallèle à la surface de miroir, de sorte qu'un pivotement du miroir de renvoi (6) autour de l'axe (7, 8) ajuste une élévation de la direction d'observation.

7. Interféromètre (1) selon l'une quelconque des revendications 3 à 5, le miroir de renvoi définissant une direction d'observation du capteur d'image et le miroir de renvoi pouvant pivoter autour d'un axe agencé selon un angle par rapport à la surface de miroir, de sorte qu'un pivotement du miroir de renvoi (6) autour de l'axe (7, 8) ajuste un azimut de la direction d'observation.

8. Interféromètre (1) selon l'une quelconque des revendications 3 à 7, le miroir de renvoi (6) étant agencé de manière pivotante autour d'un premier axe (7, 8) et autour d'un deuxième axe (7, 8), le premier axe (7, 8) et le deuxième axe (7, 8) formant un angle.

9. Interféromètre (1) selon la revendication précédente, **caractérisé en ce que** le premier axe (7, 8) et le deuxième axe (7, 8) sont perpendiculaires l'un par rapport à l'autre.

10. Interféromètre (1) selon l'une quelconque des revendications précédentes, ladite au moins une marque de référence (11, 12) étant conçue de telle manière que la marque de référence (11, 12) effectue au moins une diffusion, une absorption, ou une filtration du rayonnement électromagnétique ou une modification de la phase dudit rayonnement électromagnétique.

11. Interféromètre (1) selon l'une quelconque des revendications précédentes, **caractérisé en ce que** le dispositif de commande et d'évaluation (10) est conçu de telle manière que le dispositif de commande et d'évaluation (10) réunisse ledit au moins un premier ensemble de données d'image et ledit au moins un deuxième ensemble de données d'image en un ensemble de données d'image global lorsque l'interféromètre est en fonctionnement, la première valeur pour la première position et la deuxième valeur pour la deuxième position étant utilisées pour un positionnement dudit au moins un premier ensemble de données d'image et dudit au moins un deuxième ensemble de données d'image l'un par rapport à l'autre au sein de l'ensemble de données d'image global.

12. Interféromètre (1) selon l'une quelconque des revendications précédentes, le dispositif de commande et d'évaluation (10) étant conçu de telle manière que, pour au moins trois différences de phase discrètes différentes les unes des autres entre le rayonnement électromagnétique sur le trajet objet et le rayonnement électromagnétique sur le trajet de référence, une intensité respective est enregistrée à l'emplacement d'un motif d'interférence et au moins une hauteur de la surface de la scène ou une inclinaison de la marque de référence (11, 12) est déterminée à partir desdits au moins trois enregistrements.

13. Interféromètre (1) selon l'une quelconque des revendications 1 à 11, le dispositif de commande et d'évaluation (10) étant conçu de telle manière que, pour un agencement au sein duquel le trajet objet et le trajet de référence forment sur le capteur d'image (5) un angle différent de zéro, l'intensité d'un motif d'interférence est enregistrée en trois emplacements adjacents du motif d'interférence et au moins une hauteur de la surface (3) ou l'inclinaison de la marque de référence (11, 12) est déterminée à partir desdits au moins trois enregistrements.
